# EUROPEAN PATENT APPLICATION

(11) **EP 1 810 863 A1**
(43) Date of publication of application: **25.07.2007**
(21) Application number: 07250227.1
(22) Date of filing: 19.01.2007
(51) Int. Cl.: B60K 15/035

(54) **Vent including a separator membrane**

(30) Priority: 20.01.2006 US 760674; 20.01.2006 US 760613; 20.01.2006 US 760670; 19.10.2006 US 862074; 19.10.2006 US 862077
(71) Applicant: BEMIS MANUFACTURING COMPANY, Sheboygan Falls, Wisconsin 53085 (US)
(72) Inventor: Tharp, Robert Daniel, Sussex,WI 53089 (US); Holz, Michael Hoseph, West Bend, WI 53095 (US)
(74) Representative: Holmes, Matthew Peter

(57) **Abstract**

A vent structure at least partially defining a passageway between the inside of a fuel storage tank (35,230) and the outside atmosphere includes a separator membrane (90). The separator membrane (90) is positioned within the vent structure configured to block liquid fuel in the storage tank (35,230) from reaching the outside atmosphere through the passageway. The separator membrane (90) is permeable by air. The vent structure may be in the form of a cap (25) or a remote vent (220), or it may be provided substantially within the fuel storage tank (35,230). The vent structure may be provided as part of a fuel evaporative emissions system for a vehicle or motor-driven power equipment.

## Description

### RELATED APPLICATIONS

The present application claims priority to U.S. Patent Application Serial No. 60/760,674, filed January 20, 2006, entitled LOCKING CAP, and to U.S. Patent Application Serial No. 60/760,613, filed January 20, 2006, entitled MODULAR RATCHET CAP, and to U.S. Patent Application Serial No. 60/760,670, filed January 20, 2006, entitled VENT INCLUDING A SEPARATOR MEMBRANE, and to U.S. Patent Application Serial No. 60/862,074, filed October 19, 2006, entitled VENT INCLUDING A SEPARATOR MEMBRANE, and to U.S. Patent Application Serial No. 60/862,077, filed October 19, 2006, entitled LOCKING CAP, and to U.S. Patent Application Serial No. _____ (Attorney Docket No. 053196-9020-02), filed January 19, 2007, entitled LOCKING CAP, and to U.S. Patent Application Serial No. _____ (Attorney Docket No. 053196-9021-01), filed January 19, 2007, entitled MODULAR RATCHET CAP, the entire contents of all of which are hereby incorporated by reference.

### FIELD OF THE INVENTION

The present invention relates to a vent arrangement and, more particularly, to a cap for a fuel tank or remote vent for a fuel system and including a membrane.

### SUMMARY OF THE INVENTION

In independent aspects and in some constructions, the invention provides a cap for closing an opening, such as the filling tube on a fuel tank, the cap generally including a cap housing operable to close the opening, a structure supported by the housing and defining a vent, the vent allowing the flow of gas (e.g., air) therethrough, and a membrane positioned in a flow path and preventing flow of one or more selected fluids (e.g., liquid, fuel, harmful gases, etc.) from exiting the vent.

In independent aspects and in some constructions, the invention provides a vent for a closed system, such as a fuel system, the vent generally including a vent housing in fluid communication with the system, a structure supported by the housing and defining a vent, the vent allowing the flow of gas (e.g., air) therethrough, and a membrane positioned in a flow path and preventing flow of one or more selected fluids (e.g., liquid, fuel, harmful gases, etc.) from exiting the vent. In some constructions, the vent generally includes a remote vent.

Independent features and independent advantages of the present invention will become apparent to those skilled in the art upon review of the detailed description and drawings.

### BRIEF DESCRIPTION OF THE DRAWINGS

FIG. 1 is a schematic view of a fuel storage system having a vented membrane cap;

FIG. 2 is an exploded assembly view of the vented membrane cap of FIG. 1;

FIG. 3 is perspective view of the vented membrane cap of FIG. 1;

FIG. 4 is a cross-sectional view of the vented membrane cap of FIG. 1, taken along line 4-4 of FIG. 3;

FIG. 5 is an exploded assembly view of a vented membrane cap according to another embodiment of the invention;

FIG. 6 is a schematic view of a fuel storage system including the vented membrane cap of FIG. 5;

FIG. 7 is an exploded assembly view of a remote vent according to another embodiment of the invention;

FIG. 8 is a cross-sectional view of the remote vent of FIG. 7;

FIG. 9 is a schematic view of a fuel storage system including the remote vent of FIG. 7;

FIG. 10 is a schematic view of a fuel storage system including a bottom-vented membrane-separated vent head according to another embodiment of the invention; and

FIG. 11 is a schematic view of a fuel storage system including a membrane-capped vent tube positioned within a storage tank volume according to yet another embodiment of the invention.

Before any independent features and at least one embodiment of the invention are explained in detail, it is to be understood that the invention is not limited in its application to the details of the construction and the arrangement of the components set forth in the following description or illustrated in the drawings. The invention is capable of other embodiments and of being practiced or of being carried out in various ways. Also, it is understood that the phraseology and terminology used herein is for the purpose of description and should not be regarded as limiting.

Although references are made below to directions, such as left, right, up, down, top, bottom, front, rear, forward, back, etc., in describing the drawings, the references are made relative to the drawings (as normally viewed) for convenience. These directions are not intended to be taken literally or to limit the present invention in any form.

The use of "including", "having", and "comprising" and variations thereof herein is meant to encompass the items listed thereafter and equivalents thereof as well as additional items. The use of letters to identify elements of a method or process is simply for identification and is not meant to indicate that the elements should be performed in a particular order.

### DETAILED DESCRIPTION

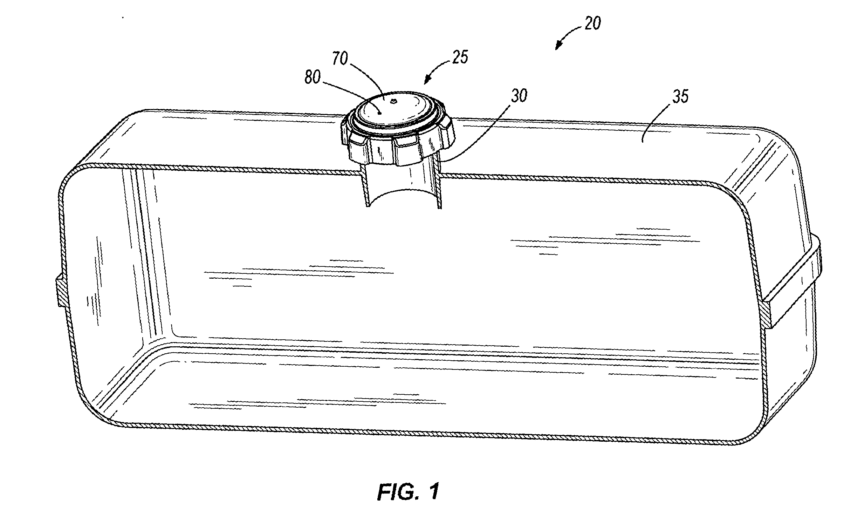

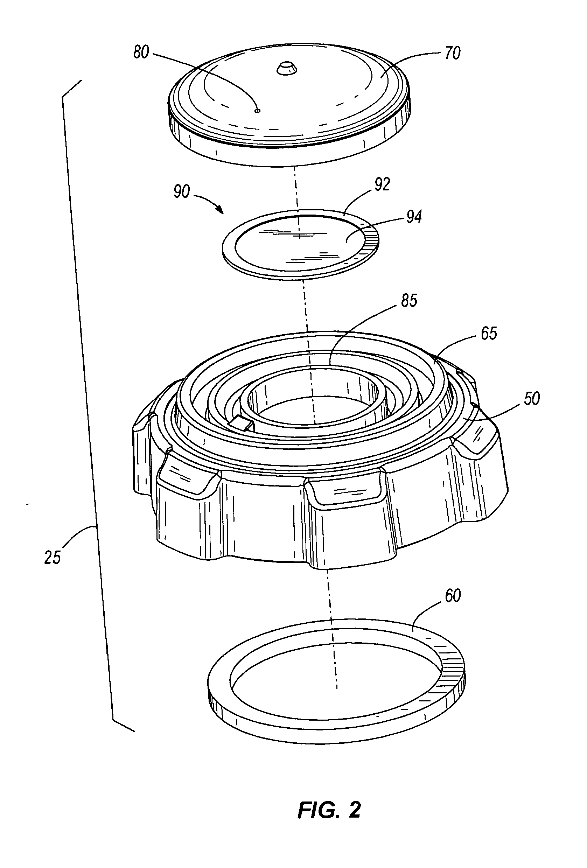

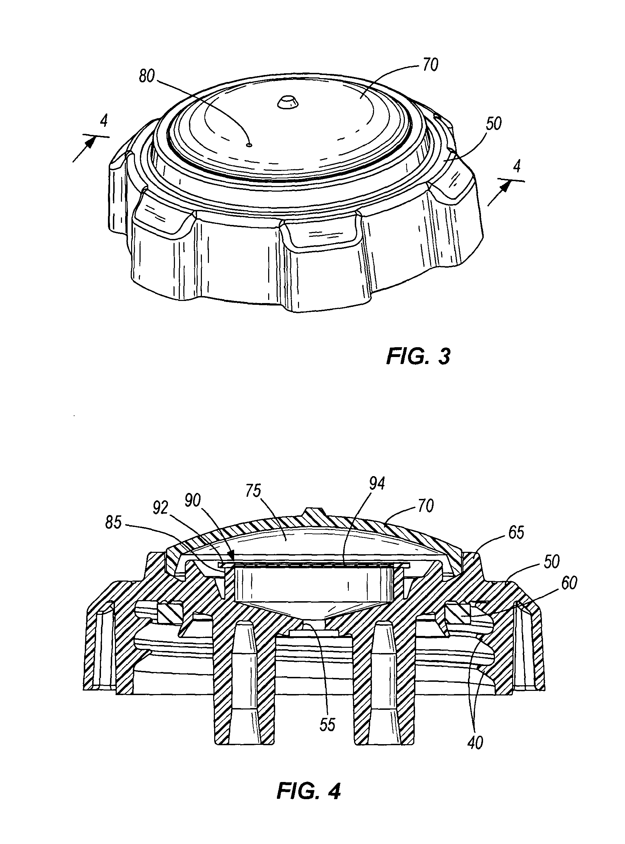

FIGS. 1-4 illustrate a fuel storage system 20 and components thereof, including a cap 25 for closing an opening 30, such as on a fuel tank 35. In the illustrated embodiment, the cap 25 includes threads 40 for mating with corresponding threads (not shown) on the opening 30. The cap 25 serves as a venting structure, which allows for passage of air from an inside of the fuel tank 35 to an outside of the fuel tank 35 and/or vice versa. The venting structure allows venting of air into and out of the fuel tank 35 while blocking the passage of liquid, such as gasoline, diesel, etc. In some embodiments, the venting structure also blocks the passage of fuel vapor volatile organic compounds (VOCs), etc. while allowing the passage of select gases, including air.

The cap 25 of the illustrated embodiment is simply constructed of a main body portion 50 having a venting aperture 55 formed centrally therein. The main body portion 50 is also formed to include the threads 40 for engaging the opening 30. A gasket 60 is held in position adjacent the threads 40 for engaging the opening 30 when the cap 25 is installed thereon, the gasket 60 forming a circumferential seal between the cap 25 and the opening 30. The main body portion 50 includes an outer circumferential wall 65 projecting outwardly (away from the fuel tank 35). A cover 70 is coupled to the main body portion 50 adjacent the outer circumferential wall 65 to define a substantially enclosed chamber 75 with the main body portion 50. The cover 70 includes a vent hole 80 providing limited communication between the chamber 75 and the atmosphere outside the cap 25. The main body portion 50 further includes an inner circumferential wall 85 radially inward of the outer circumferential wall 65, and projecting in the same direction as the outer wall 65.

A separator membrane 90 is supported by the cap 25. The separator membrane includes a peripheral rim portion 92 having a larger thickness than a central portion 94. In the illustrated embodiment, the membrane 90 is supported at its peripheral rim portion 92 by the inner circumferential wall 85 of the main body portion 50 such that it is positioned within the chamber 75. In the illustrated construction, the membrane 90 is in communication with the venting aperture 55 on one side (the "interior" side) and in communication with the vent hole 80 on the opposite side (the "exterior" side). The membrane 90 is generally planar and disk-shaped in the illustrated embodiment. The membrane 90 is constructed of a material, as discussed in greater detail below, which is impermeable to liquids such as gasoline and diesel fuel.

The membrane 90 is joined to the inner circumferential wall 85, which may be constructed of a plastic material, in a liquid leak-free manner. In some constructions, the membrane 90 may be welded to the plastic of the vent, and, in such constructions, a weld material/layer may be added to the interface between the membrane 90 and the inner circumferential wall 85. In some constructions, the membrane 90 may be welded by ultra-sonic welding, spin welding, etc. to the inner circumferential wall 85. In such constructions, an additional weld material/layer may not be necessary and, therefore, may not be added.

In other constructions, other methods/structures (e.g., adhesives, molding (including insert molding), and sandwiching between adjacent parts, etc.) may be employed as methods of mounting or joining the membrane 90 to the main body portion 50. Any of the fastening and/or sealing methods described herein are also applicable to alternate vent structures (regardless of whether they are caps or not) using a membrane similar to the membrane 90 (regardless of the exact form of the membrane). Generally, when the membrane 90 is joined with a plastic component, a membrane assembly is created that may be employed in various applications including different styles of vents (e.g., cap, remote rollover, etc.) different sizes, etc. In some constructions, the membrane 90 provides a liquid/vapor separation between a tank and a carbon canister or air cleaner.

The cap 25 defines a flow path from the fuel tank 35 to the outside atmosphere. The membrane 90 is positioned in the flow path between the interior of the fuel tank 35 and the exterior of the cap 25 opposite the fuel tank. Accordingly, for any gaseous fluid to pass from the interior of the fuel tank 35 to the outside atmosphere or vice versa, such gaseous fluid must pass through the membrane 90.

In one construction, the membrane 90 is constructed of a material that is impermeable to liquid (e.g., gasoline, diesel fuel, etc.) such that the fuel tank 35 is vented to the atmosphere through the flow path of the cap 25, and a separate rollover valve is not necessary to keep liquid from escaping the fuel tank 35 through the flow path. The membrane 90 acts as a rollover leak protection mechanism, which has no moving parts to be relied upon. The cap 25 as a whole is a venting structure with built-in rollover leak protection, which is advantageously provided in the form of the inert membrane 90.

In another construction, the membrane 90 is constructed of a material that is impermeable to liquid (e.g., gasoline, diesel fuel, etc.) and also impermeable to fuel vapor while being permeable to air. As used herein, fuel vapor refers to the majority of chemical compounds that commonly evaporate from liquid gasoline, diesel fuel, etc. These are often referred to as VOCs, the release of which are regulated and restricted by certain federal, state, and/or local regulations for many applications. In this construction, the cap 25 is a venting structure with built-in rollover leak protection as well as evaporated fuel vapor blocking.

When the cap 25 is installed on the opening 30, make-up air is able to be drawn into the fuel tank 35 and alternately, excess pressure in the fuel tank 35 is able to be relieved without releasing any substantial amount of fuel vapor to the outside atmosphere. This is particularly beneficial to prevent exposure of an operator to any substantial amount of fuel vapor during operation (e.g., operating a lawn mower, riding an off-road vehicle, etc.).

In some embodiments and under some circumstances, fuel vapor may be released to the outside atmosphere when the cap 25 is removed from the opening 30. In some embodiments and under some circumstances, fuel vapor components are trapped in the membrane 90 during one condition (e.g., warm fuel sitting in the fuel tank 35 with the associated internal combustion engine idling or off) and substantially cleared from the membrane during another condition (e.g., running of the internal combustion engine with make-up air entering the fuel tank 35 through the cap 25).

Regardless of the membrane material, the cap 25 and fuel storage system 20 may be incorporated with an evaporative emissions system including additional emissions-treating components and/or flow-controlling components. In some embodiments, a carbon canister is included to filter fuel vapor and retain selected chemical compounds of the fuel vapor therein. The selected chemical compounds are then partially or wholly burned with the fuel in the internal combustion engine of the vehicle, apparatus, etc. as discussed in detail in U.S. Patent Application Serial No. 11/058,063, filed February 14, 2005, now published as U.S. Patent Application Publication No. 2006/0011173, the entire contents of which is hereby incorporated by reference.

In some aspects and in some constructions, the membrane 90 can be of a material and configuration/structure to prevent leakage of liquid fuel from within the fuel tank 35 while allowing flow of gaseous substances therethrough. In some aspects and in some constructions, the membrane 90 can be of a material and configuration/structure to prevent leakage of liquid fuel and select gaseous substances such as fuel vapor while allowing flow of other gaseous substances such as air therethrough.

In some constructions, the membrane 90 resists the build-up of varnishes from fuels. Additionally, dirt and debris (whether from inside the fuel tank 35 or the outside atmosphere) are prevented from reducing the gaseous flow capacity of the membrane 90. In some constructions, a felt dust seal is provided integral with or adjacent to the vent. The membrane 90 prevents liquid fuels from escaping a tank during virtually all modes of operation, including: normal running, roll over condition, storage, service/maintenance, etc.

The membrane 90 may provide an oleophobic and/or hydrophobic filter, as discussed above. The membrane 90 may be similar to that described and illustrated in U.S. Patent No. 6,579,342 issued January 17, 2003, the entire contents of which is hereby incorporated by reference.

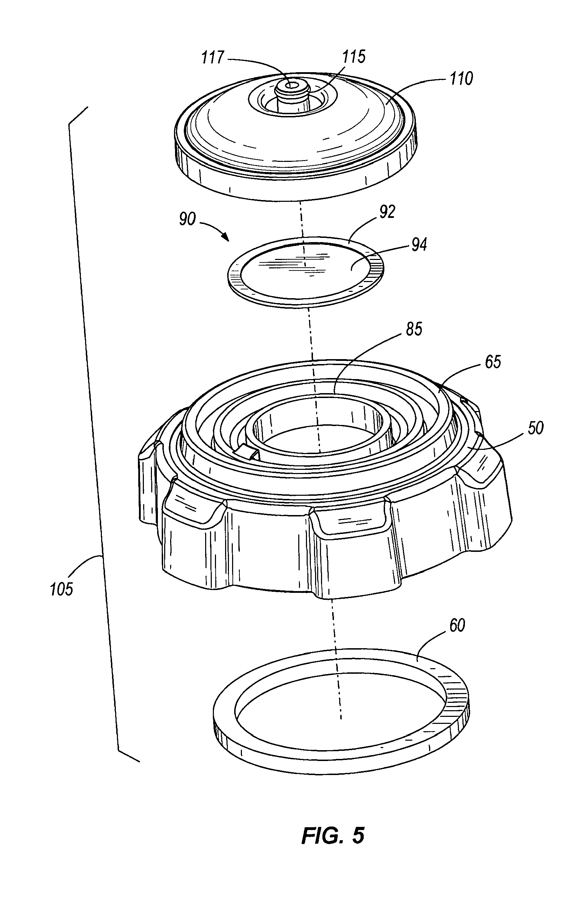

FIG. 5 illustrates a cap 105 similar to that illustrated in FIGS. 1-4 in all aspects except for the cover 110, which is distinctive to this embodiment. As such, all reference numerals except those relating to the cover 110 are carried over from the first embodiment. The cover 110 includes a nipple 115 projecting outwardly from an external surface and defining a vent aperture 117. Although the nipple 115 is shown as having a barb thereon, it may alternately be threaded or attachable to mating structure with hose clamps, compression fittings, etc. The nipple 115 provides a connection structure for extending the flow path from the fuel tank 35 and chamber 75 to a remote location. As in the first embodiment, the flow path provides communication between the inside of the fuel tank 35 and the outside atmosphere.

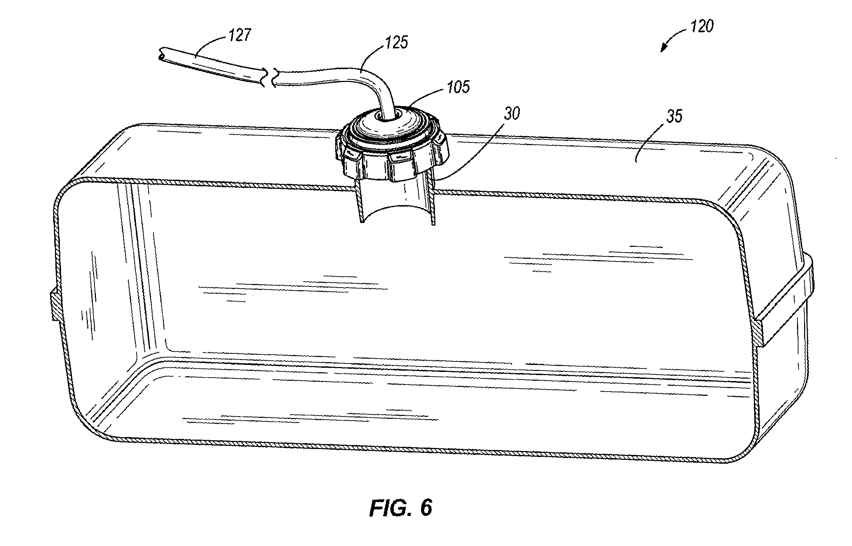

As shown in FIG. 6, a fuel storage system 120 includes the cap 105 coupled to the opening 30 of the fuel tank 35. A hose 125 is coupled to the nipple 115 of the cap 105. The hose 125 has a remote end 127 fixed at a location remote from the cap 105 and in either direct or indirect communication with the outside atmosphere. In some constructions, the hose 125 couples the cap 105 to a carbon canister, especially in an application in which the associated apparatus having an internal combustion engine is regulated for evaporative emissions levels. Thus, the fuel storage system 120 is a part of an evaporative emissions system in such constructions. The evaporative emissions system may include certain functional aspects and components as discussed in U.S. Patent Application Publication No. 2006/0011173. Such additional aspects and/or components are equally applicable to the alternate constructions discussed below.

In other embodiments, a carbon canister is not coupled to the hose 125. In such embodiments, it may not be necessary to restrict the release of fuel vapor or alternately, other means may be provided for restricting the release of fuel vapor from the fuel tank 35, such as a membrane material constructed to inhibit the passage of fuel vapor. As such, the hose 125 may be substantially open-ended at its remote end 127. The remote location may be a more desirable location than the location of the cap 105 to vent to and/or draw from.

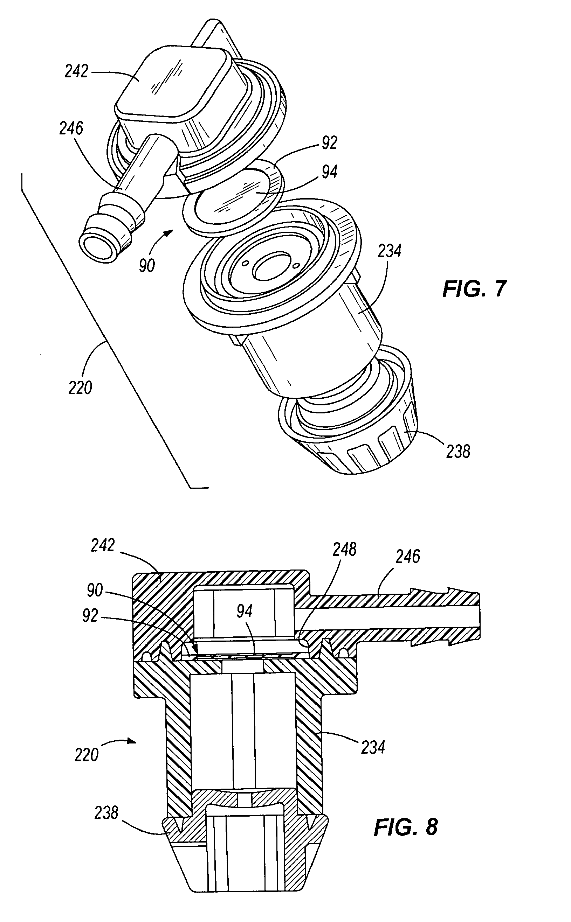

FIGS. 7-9 illustrate a remote vent structure 220 for installation in a closed system, such as a fuel storage system 230, incorporating the membrane 90. The vent structure 220 can be placed in the fuel storage system 230 remotely from a cap 232, which mates to an opening of a fuel tank 233. The cap 232 need not be vented as the remote vent structure 220 provides venting for the fuel storage system 230.

In the illustrated construction, the vent structure 220 includes a housing 234, a ramp 238, and a cover 242. The cover 242 includes a port 246, which may be connected to a tube, hose, or other conduit. The membrane 90 is disposed between the housing 234 and the cover 242. The housing 234 defines a path from the fuel tank 233 to the port 246 in the cover 242.
The membrane 90 is positioned in the flow path between the interior of the housing 234 and the port 246 in the cover 242. Accordingly, for any acceptable gas and/or liquid to pass between the interior of the fuel storage system 230 and the exterior of the fuel storage system 230, such gas and/or liquid must pass through the membrane 90.

Mounting of the membrane 90 within the vent structure 220 may include methods similar to those discussed above with respect to the cap 25. However, the vent structure 220 provides a different accommodating structure for the membrane 90. A flat upper wall of the housing 234 provides a resting surface for the membrane 90. The cover 242 includes a pocket 248, which is substantially form-fitting around the peripheral rim portion 92 of the membrane 90. The membrane 90 may be substantially self-sealing around the peripheral rim portion 92, or alternately, fastening and sealing means may be provided as discussed above with respect to the cap 25.

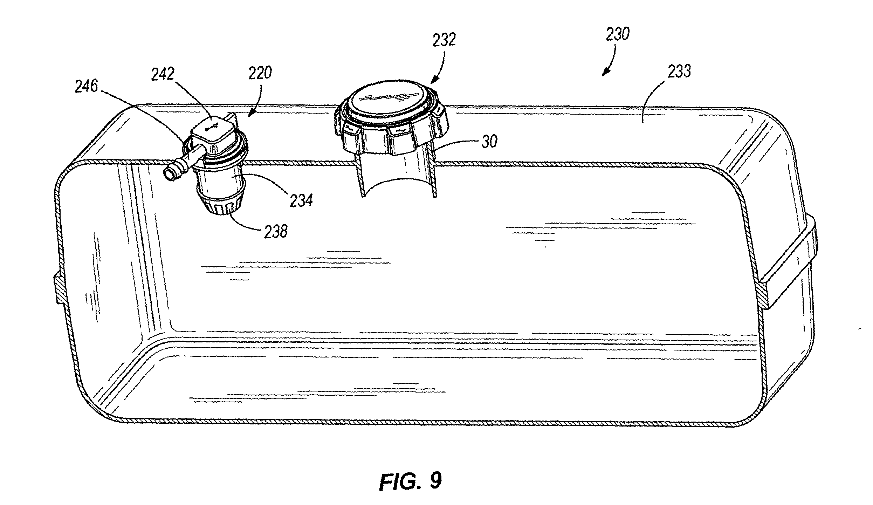

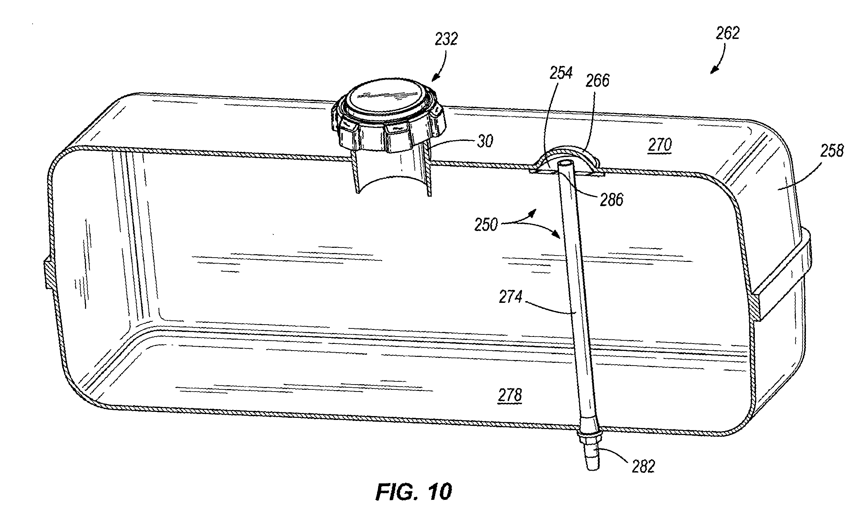

In yet another construction shown in FIG. 10, a vent structure 250 with a separator membrane 254 is configured to be mounted within a fuel tank 258 of a fuel storage system 262. The separator membrane 254 may be located adjacent a vent head 266 (e.g., an integrally formed pocket in an upper wall 270 of the fuel tank 258). A tube 274 is coupled to the membrane 254 and open to the volume defined by the vent head 266. The tube 274 is routed through the bottom wall 278 of the fuel tank 258 with a fitting 282 to fluidly couple the volume within the vent head 266 to the outside of the fuel tank 258. A cap 232, which is simple and not necessarily vented, is provided as in the embodiment of FIG. 9.

The vent structure 250 allows venting the fuel tank 258 to and from the vent head 266. The volume of the vent head 266 is blocked from the liquid fuel within the fuel tank 258 by the membrane 254, which may be identical to the membrane 90 described above except for the particular shape required to couple the membrane 254 with the vent head 266 and the tube 274. As shown in FIG. 10, the membrane 254 includes a central aperture 286, which sealingly mates to the tube 274. An outer periphery of the membrane 254 sealingly mates to the fuel tank 258 at the vent head 266.

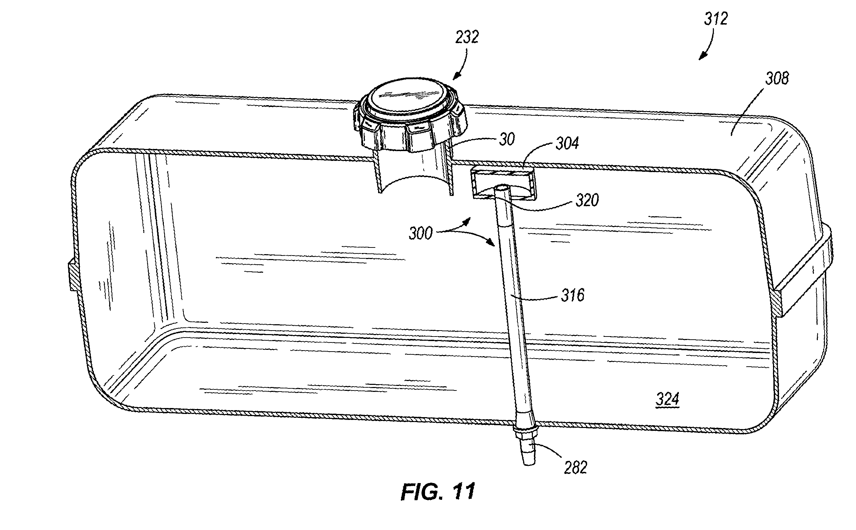

In yet another construction shown in FIG. 11, a vent structure 300 with a separator membrane 304 is configured to be mounted within a fuel tank 308 of a fuel storage system 312. The membrane 304 is formed to define an interior volume, which is in fluid communication with the inside of a tube 316. The membrane 304 is formed with a central aperture 320, which sealingly mates with the tube 316. The membrane 304 is positioned generally at the top of the fuel tank 308, and the tube 316 couples the interior volume of the membrane 304 with the atmosphere outside the fuel tank 308 by exiting through a bottom wall 324 of the fuel tank 308. Other than its specific form, the membrane 304 is similar to the membranes 90 and 254 described above, including alternate materials, performance, etc. thereof as discussed throughout.

The following tables and graphs illustrate the venting requirements of a system, such as the fuel system included for a small engine. In the tables and graphs, the vent with the membrane allows sufficient flow of make up air into the tank/system so that the engine operates properly. "Vent" is used generally to encompass vents in caps and remote vents, and membrane encompasses any of the membranes illustrated in the figures and/or described herein. The vent has sufficient air/vapor flow through it to provide the venting of air and vapors generated, for example, from the diurnal temperature cycles and/or the excessive temperature changes typically seen in small off highway engine equipment. The membrane allows venting of internal tank pressure without undo pressure build-up in the tank.

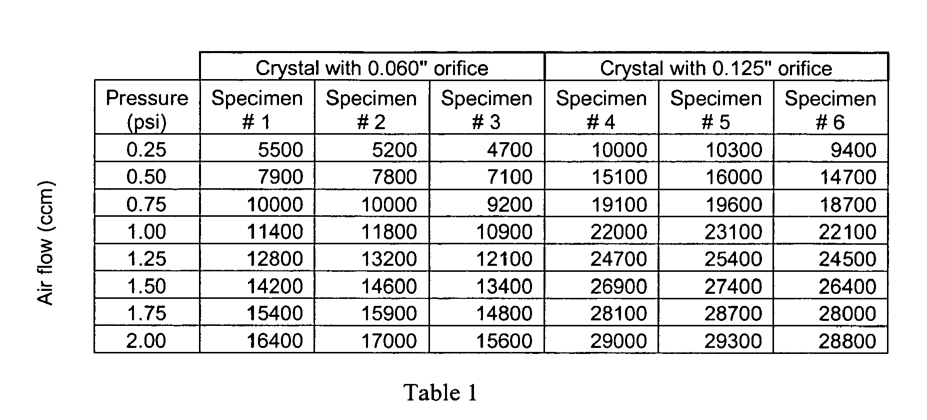

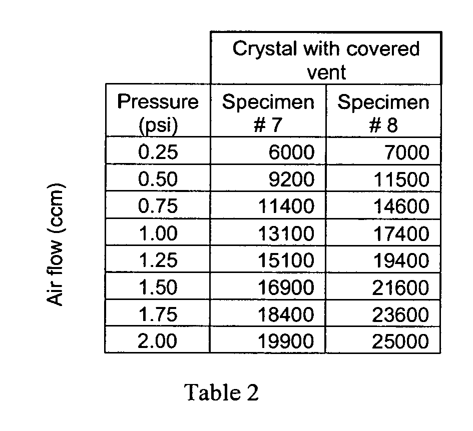

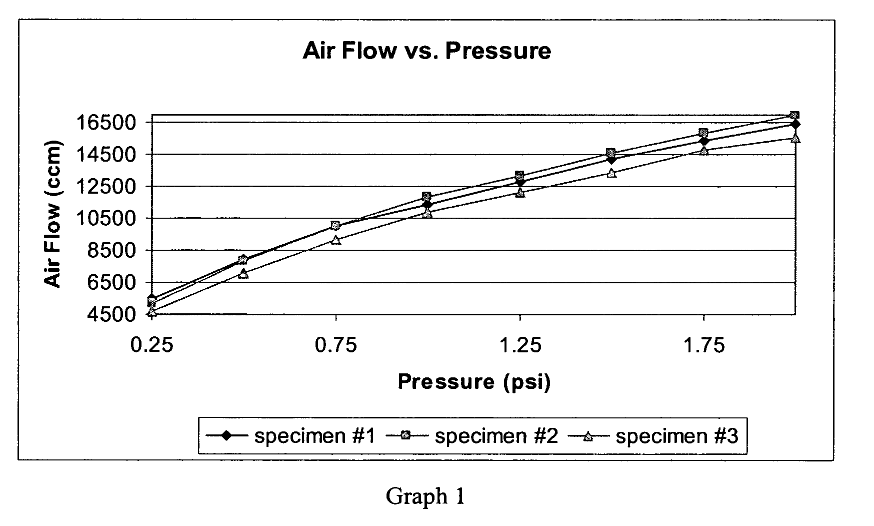

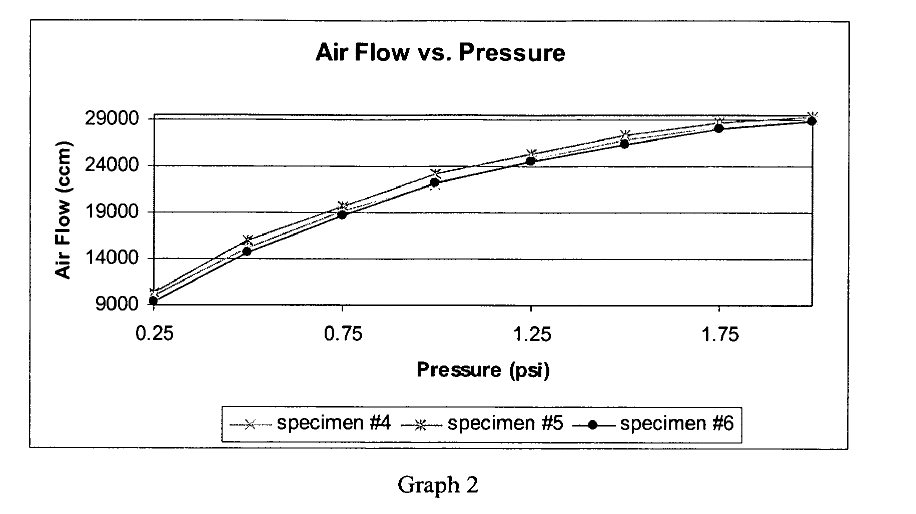

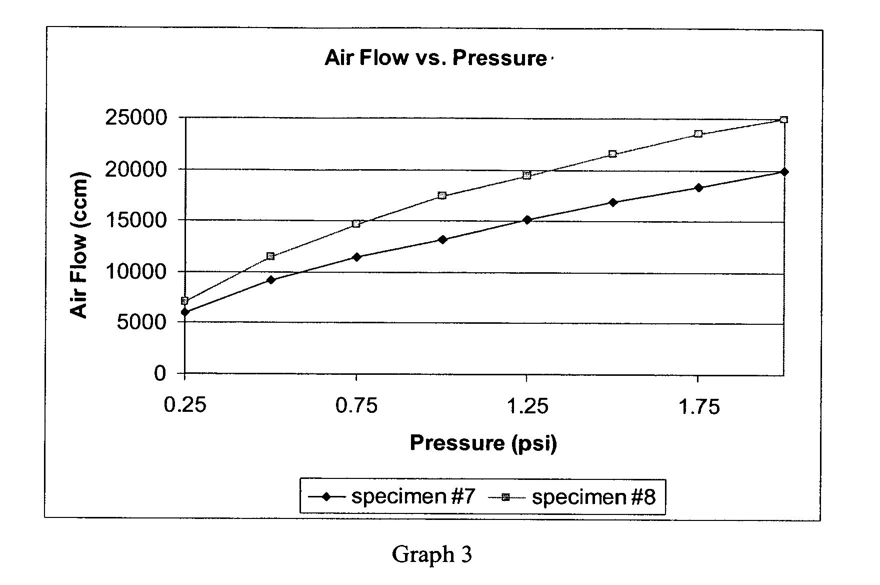

Fuel consumption for small engines
1 gallon per hour at full throttle for every 10 hp plus 1 gallon

**Table 3**

| Engine hp | gal/hr | cc/hr range | | cc/m range | |
|---|---|---|---|---|---|
| 1 | 1.1 | 4138 | 4637 | 69 | 77 |
| 2 | 1.2 | 4514 | 5059 | 75 | 84 |
| 3 | 1.3 | 4890 | 5480 | 82 | 91 |
| 4 | 1.4 | 5266 | 5902 | 88 | 98 |
| 5 | 1.5 | 5643 | 6324 | 94 | 105 |
| 6 | 1.6 | 6019 | 6745 | 100 | 112 |
| 7 | 1.7 | 6395 | 7167 | 107 | 119 |
| 8 | 1.8 | 6771 | 7588 | 113 | 126 |
| 9 | 1.9 | 7147 | 8010 | 119 | 133 |
| 10 | 2 | 7523 | 8431 | 125 | 141 |
| 12 | 2.2 | 8276 | 9275 | 138 | 155 |
| 15 | 2.5 | 9404 | 10539 | 157 | 176 |
| 18 | 2.8 | 10533 | 11804 | 176 | 197 |
| 20 | 3 | 11285 | 12647 | 188 | 211 |
| 25 | 3.5 | 13166 | 14755 | 219 | 246 |
| 30 | 4 | 15047 | 16863 | 251 | 281 |

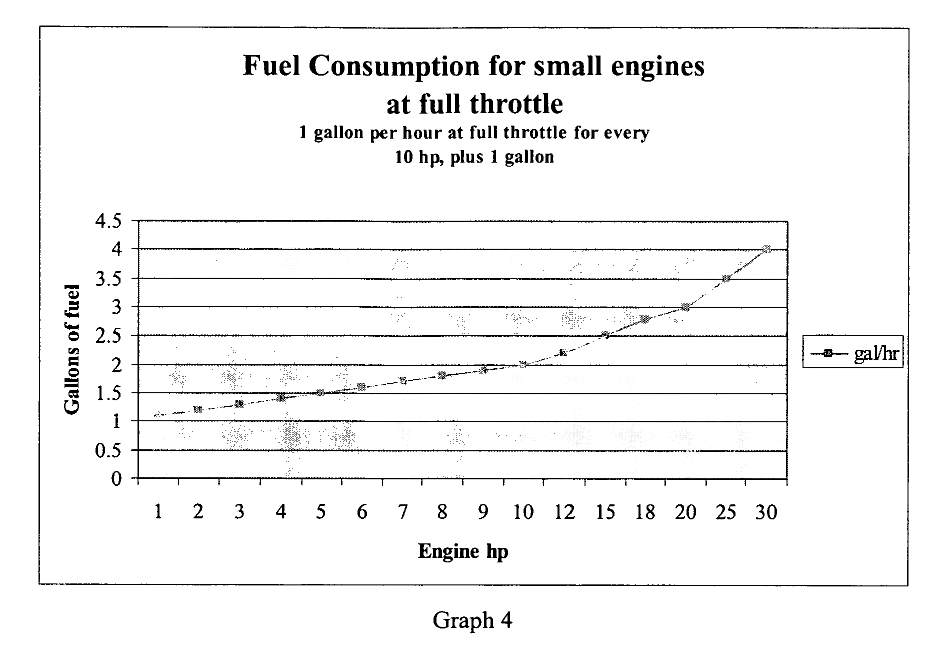

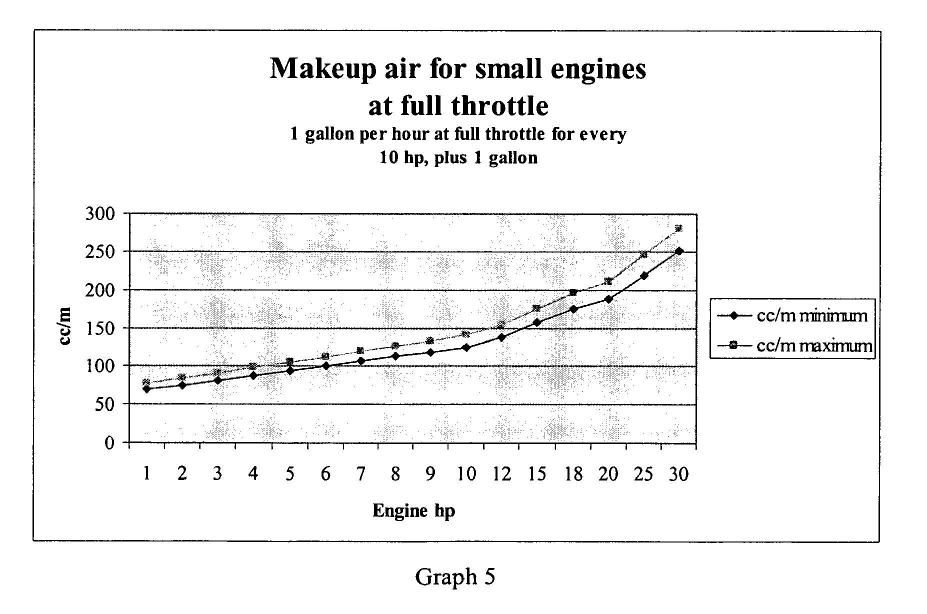

## Claims

1. A fuel evaporative emissions system for a vehicle or motor-driven power equipment comprising:
a storage tank for holding a volume of fuel;
a vent structure at least partially defining a passageway between the inside of the storage tank and the outside atmosphere; and
a separator membrane positioned within the vent structure configured to block liquid fuel in the storage tank from reaching the outside atmosphere through the passageway, the separator membrane being permeable by air;
wherein the vent structure includes at least one of a cap, and a storage tank.

2. The fuel evaporative emissions system of claim 1, wherein the vent structure includes a cap configured to close an opening of the storage tank, the cap having a main body with a vent aperture formed therein.

3. The fuel evaporative emissions system of claim 2, wherein the cap includes a cover coupled to the main body and at least partially defining a chamber in communication with the vent aperture in which the separator membrane is mounted.

4. The fuel evaporative emissions system of claim 3, wherein the main body is formed with an annular wall extending into the chamber, the separator membrane being bonded to the annular wall.

5. The fuel evaporative emissions system of claim 4, wherein the separator membrane includes a peripheral rim that is welded to the annular wall.

6. The fuel evaporative emissions system of claim 1, further comprising a carbon canister between the vent structure and the outside atmosphere along the passageway for removing selected components of fuel vapor exiting the storage tank.

7. The fuel evaporative emissions system of claim 1, wherein the separator membrane substantially blocks fuel vapors from reaching the outside atmosphere through the passageway.

8. The fuel evaporative emissions system of claim 7, wherein the separator membrane is in direct contact with the outside atmosphere.

9. A vent structure for a fuel system comprising:
a housing at least partially defining a chamber; and
a separator membrane positioned within the chamber, the separator membrane being impermeable to liquid and permeable to select gases;
wherein the separator membrane includes a peripheral rim, said rim being bonded to the housing.

10. The vent structure of claim 9, wherein the housing is part of a fuel cap configured to close an opening of a fuel containment structure of the fuel system.

11. The vent structure of claim 10, wherein the fuel cap includes a first end configured to mate with the opening and a second end opposite the first end, a cover member being attached to the fuel cap at the second end, wherein the cover member is formed with an opening in communication with the chamber and the separator membrane.

12. The vent structure of claim 11, further comprising a hose coupled to the opening in the cover member and having a remote end positioned at a remote location from the fuel cap.

13. The vent structure of claim 12, further comprising an air filter positioned adjacent the remote location.

14. The vent structure of claim 12, further comprising a carbon canister coupled to the remote end of the hose.

15. The vent structure of claim 9, wherein the rim of the separator membrane is welded to the housing.

16. The vent structure of claim 9, wherein the housing is part of a remote vent that is coupled to a fuel containment structure of the fuel system.

17. A fuel cap configured for attachment to a fuel containment structure of a vehicle or other motor-driven power equipment comprising:
a main body portion having a vent aperture formed therein;
a chamber at least partially defined by the main body portion;
an external opening in communication with the chamber and with a surrounding atmosphere; and
a separator membrane positioned within the chamber, the separator membrane being primarily constructed of a material that blocks liquid fuel within the fuel containment structure from reaching the external opening and that allows air to flow into and out of the fuel containment structure as necessary to avoid substantial deviation from atmospheric pressure within the fuel containment structure.

18. The fuel cap of claim 17, wherein the separator membrane is primarily constructed of a material that substantially blocks the passage of hydrocarbon fuel vapor from the fuel containment structure to the surrounding atmosphere.

19. The fuel cap of claim 18, wherein the fuel cap is configured to substantially eliminate the emission of hydrocarbon fuel vapor from within the fuel containment structure without the use of a carbon canister.

20. The fuel cap of claim 17, wherein the external opening is in communication with the surrounding atmosphere with a carbon canister therebetween.
